# EUROPÄISCHE PATENTANMELDUNG

(11) **EP 1 837 633 A1**
(43) Veröffentlichungstag der Anmeldung: **26.09.2007**
(21) Anmeldenummer: 07004400.3
(22) Anmeldetag: 03.03.2007
(51) Int. Cl.: G01F 15/06, G01M 3/28, G08B 19/00

(54) **Einrichtung zum Erfassen und Signalisieren eines Lecks in einer gebäudeseitig verlegten Rohrleitung**

(30) Priorität: 22.03.2006 DE 102006013610
(71) Anmelder: Hydrometer GmbH, 91522 Ansbach (DE)
(72) Erfinder: Vom Schloss, Edgar, 90574 Rosstal (DE)
(74) Vertreter: Blaumeier, Jörg

(57) **Zusammenfassung**

Einrichtung zum Erfassen und Signalisieren eines Lecks in einer gebäudeseitig verlegten Rohrleitung, umfassend einen in diese oder eine vorgeschaltete Rohrleitung gesetzten, ein Leckerfassungsmittel aufweisenden Verbrauchszähler, der zur Erzeugung und Ausgabe eines ein Leck anzeigenden Informationssignals ausgebildet ist, wobei der Verbrauchszähler (2) direkt oder indirekt mit wenigstens einer gebäudeseitig vorgesehenen Überwachungssensoreinrichtung (4) umfassend einen Signalgeber (6) kommuniziert, an die der Verbrauchszähler (2) ein Informationssignal überträgt und die bei Eingang des Informationssignals zur Ausgabe eines Alarmsignals über den Signalgeber (6) ausgebildet ist.

## Beschreibung

Die Erfindung betrifft eine Einrichtung zum Erfassen und Signalisieren eines Lecks in einer gebäudeseitig verlegten Rohrleitung, umfassend einen in diese oder eine vorgeschaltete Rohrleitung gesetzten, ein Leckerfassungsmittel aufweisenden Verbrauchszähler, der zur Erzeugung und Ausgabe eines ein Leck anzeigenden Informationssignals ausgebildet ist.

Hat eine in einem Gebäude verlegte Rohrleitung ein Leck, tritt bis zum Erkennen des Lecks unkontrolliert Wasser aus, was zu beachtlichen Schäden führen kann. Insbesondere ist dies der Fall, wenn das Leck in einem Bereich der gebäudeseitig verlegten Rohrleitung auftritt, der sich im Wohn- oder Arbeitsbereich des Gebäudes, wo mithin Mobiliar und Geräte vorhanden sind, befindet.

Um Lecks zu erfassen, ist es bekannt, einen Verbrauchszähler als Erfassungsgerät zu nutzen. Der Verbrauchszähler, beispielsweise ein Wasser- oder Wärmezähler, ist üblicherweise keller- oder schachtseitig im Gebäude installiert, üblicherweise unmittelbar dem Eingang des von der zentralen Versorgungsleitung abgehenden Versorgungsrohrs im Gebäude nachfolgend. Der Wasserzähler erfasst die durchströmende Wassermenge, wenn an einer Zapfstelle Wasser verbraucht wird. Üblicherweise besitzt er eine Erfassungs- oder Auswerteelektronik, die den entsprechenden Erfassungs- oder Messwert ermittelt. Ist nun rohrleitungsseitig ein Leck vorhanden, so ergibt sich zwangsläufig ein Dauerfluss, wobei die pro Zeiteinheit fließende Wassermenge abhängig von der Leckgröße ist. Das Leckerfassungsmittel arbeitet nun derart, dass bei Erfassen eines hinreichend langen Wasserflusses davon ausgegangen wird, dass ein Leck vorhanden ist, denn es ist völlig unüblich, dass über einen langen Zeitraum, üblicherweise eine oder mehrere Stunden, ein im Wesentlichen konstanter oder zumindest ein dauerhaft gegebenes Mindestniveau erreichender Wasserfluss gegeben ist. Die zählerseitige Elektronik ist nun als Erfassungsmittel dazu ausgebildet, einen solchen Umstand zu erkennen und bei Ermittlung eines solchen ein Informationssignal auszugeben. Dabei ist ein System bekannt, bei dem dem Wasserzähler ein spezieller Alarmgeber zugeordnet ist, der mit dem Zähler, der einen entsprechenden Leitungsausgang und Signalausgang hat, drahtgebunden gekoppelt ist. Ermittelt nun die Elektronik als Leckerfassungsmittel ein Leck, wird über den Zählerausgang über die Leitungsverbindung ein Signal an den Alarmgeber gegeben, der daraufhin einen optischen oder akustischen Alarm gibt.

Nachteil bei dieser Ausgestaltung ist jedoch, dass hierfür ein spezieller Signalgeber als Teil der Alarmeinrichtung von Nöten ist, der ausschließlich diese eine Funktion hat, was das System teuer macht. Darüber hinaus ist üblicherweise die Verbindungsleitung relativ kurz, so dass der Alarmgeber häufig nahe am Verbrauchszähler anzuordnen ist, was dahingehend nachteilig ist, als der Verbrauchszähler üblicherweise wie beschrieben im Keller oder in einem Kellerschacht angeordnet ist und mithin das gegebene Alarmsignal infolge der Kürze der Leitungsverbindung mitunter nicht sofort wahrgenommen wird.

Der Erfindung liegt damit das Problem zugrunde, eine Einrichtung anzugeben, die demgegenüber vereinfacht konzipiert ist und ohne speziell vorgesehenen einrichtungsspezifischen Alarmgeber auskommt.

Zur Lösung des Problems ist bei einer Einrichtung der eingangs genannten Art erfindungsgemäß vorgesehen, dass der Verbrauchszähler direkt oder indirekt mit wenigstens einer gebäudeseitig vorgesehenen Überwachungssensoreinrichtung umfassend einen Signalgeber kommuniziert, an die der Verbrauchszähler ein Informationssignal überträgt und die bei Eingang des Informationssignals zur Ausgabe eines Alarmsignals über den Signalgeber ausgebildet ist.

Die erfindungsgemäße Einrichtung zeichnet sich dadurch aus, dass sie wenigstens eine Überwachungssensoreinrichtung in das Alarmsystem einbindet, die ohnehin gebäudeseitig vorgesehen ist und die grundsätzlich der Überwachung anderer Situationen oder Umstände oder Zustände in einem Gebäude dient, mithin also originär eine spezielle Überwachungsfunktion hat. Die erfindungsgemäße Einrichtung nutzt nun diese ohnehin vorhandene Überwachungssensoreinrichtung als Alarmsignalgeber, indem der wenigstens eine Verbrauchszähler mit dem Leckerfassungsmittel mit dieser gebäudeseitig vorgesehenen wenigstens eine Überwachungssensoreinrichtung kommuniziert. Ermittelt das Leckerfassungsmittel ein etwaiges Leck, so wird zählerseitig ein Informationssignal erzeugt und über die Kommunikationsverbindung an die Überwachungssensoreinrichtung gegeben, die zum Empfang desselben ausgebildet ist und bei Eingang des Informationssignals den Signalgeber entsprechend ansteuert, so dass dieser ein optisches und/oder akustisches Alarmsignal ausgibt. Damit ist bei der erfindungsgemäßen Einrichtung ein spezieller einrichtungsspezifisch konfigurierter oder auszuführender Signalgeber nicht erforderlich, vielmehr wird zweckmäßigerweise ein bereits vorhandener, jedoch gänzlich anderen Überwachungszwecken dienender Signalgeber als A-larmsystemkomponente eingebunden.

Dabei ist es besonders zweckmäßig, wenn die eingebundene Überwachungssensoreinrichtung Teil eines mehrere solcher miteinander drahtgebunden oder drahtlos kommunizierender Überwachungssensoreinrichtungen umfassenden Netzwerks ist, wobei die empfangende Überwachungssensoreinrichtung bei Eingang eines Informationssignals zur Übertragung eines die Alarmsignalgabe anzeigenden Signals an eine oder mehrere weitere Überwachungssensoreinrichtungen ausgebildet ist. Gemäß dieser Erfindungsausgestaltung setzt der Verbrauchszähler mit dem Leckerfassungsmittel auf ein vorhandenes Überwachungssensornetzwerk auf, nutzt also dieses in seiner gesamten Breite zur Alarmsignalgabe. Bei Erfassung eines Lecks wird gemäß dieser Erfindungsausgestaltung ein Informationssignal an wenigstens eine erste Überwachungssensoreinrichtung gegeben, die zum einen selber ein Alarmsignal über den eigenen Signalgeber ausgibt, zum anderen aber auch sofort ein entsprechendes Informationssignal an die anderen im Netzwerk befindlichen Überwachungssensoreinrichtungen weitergibt, die dann ihrerseits entsprechende Alarmsignale über den eigenen Signalgeber ausgeben. Nachdem diese Überwachungssensoreinrichtungen im Gebäude verteilt angeordnet sind, gelingt auf diese Weise die Alarmierung an einer Vielzahl verschiedener Orte, so dass die Wahrnehmung des Alarms auch sichergestellt ist. Selbstverständlich besteht dabei die Möglichkeit, die Alarmierung über das Netzwerk in einer vorbestimmten Reihenfolge mit einem vorbestimmten Zeitschema vorzunehmen, so dass beispielsweise mit Eingang eines ersten vom Zähler gegebenen Informationssignals nicht sofort alle Überwachungssensoreinrichtungen angesprochen werden, sondern zunächst lediglich eine vorbestimmte Anzahl an bestimmten Orten, von denen beispielsweise anzunehmen ist, dass eine Person den Alarm wahrnimmt. Sollte innerhalb einer vorbestimmten Zeit beispielsweise kein Abschalt- oder Bestätigungssignal an eine das Netzwerk überwachende oder steuernde Zentrale gegeben werden, können weitere oder alle weiteren Überwachungssensoreinrichtungen zur zusätzlichen Alarmsignalgabe angesteuert werden oder über das Netzwerk an eine externe Sicherheitszentrale ein Alarmsignal gegeben werden, sofern dies nicht bereits geschehen ist.

Die erfindungsgemäße Integration des Sensoreinrichtungsnetzwerks bietet also wie beschrieben die Möglichkeit, trotz Erfassung eines Lecks über den an einer üblicherweise von bewohnten oder mit Personen besetzten Gebäudebereichen weit entfernten Stelle angeordneten Zähler eine umgehende Alarmierung in vielen oder allen Gebäudebereichen sicherzustellen.

Nach einer ersten Erfindungsalternative kann der Verbrauchszähler mit der Überwachungssensoreinrichtung direkt über eine Leitungsverbindung kommunizieren. Am Verbrauchszähler, beispielsweise an einem Wasser- oder Wärmezähler, ist ein entsprechender Anschluss für ein Verbindungskabel vorgesehen, das zu der Überwachungssensoreinrichtung, die einen entsprechenden Kabeleingang aufweist, der bei bekannten Überwachungssensoreinrichtungen in der Regel ohnehin vorgesehen ist, geführt ist. Es ist also vom Verbrauchszähler ein dünnes ein- oder zweiadriges Signalkabel zur nächstgelegenen Überwachungssensoreinrichtung zu führen. Ist diese wie beschrieben Teil eines Überwachungssensornetzwerks, so kann als erste Überwachungssensoreinrichtung die nächstgelegene Überwachungssensoreinrichtung verwendet werden, um die Verbindungsleitungslänge möglichst kurz zu halten. Die Überwachungssensoreinrichtungen untereinander sind ohnehin kommunizierend verbunden, sei es über Verbindungskabel oder drahtlos über jeweils integrierte Funksende- und -empfängereinrichtungen, so dass die Anbindung einer einzelnen Überwachungssensoreinrichtung ausreicht.

Alternativ dazu kann der mit der Überwachungssensoreinrichtung indirekt kommunizierende Verbrauchszähler drahtlos mit einem Empfänger kommunizieren, der direkt an der Überwachungssensoreinrichtung angeordnet ist oder über eine Leitungsverbindung mit der Überwachungssensoreinrichtung kommuniziert. Hier ist ein separates Empfangsmodul vorgesehen, das das vom Verbrauchszähler gegebene Informationssignal empfängt und dieses an den entsprechenden Signaleingang der Überwachungssensoreinrichtung legt. Dieser äußerst einfach konzipierte Signalempfänger kann dabei entweder direkt an der Überwachungssensoreinrichtung angebaut oder angesteckt werden beziehungsweise mit dem entsprechenden Signaleingang gekoppelt werden, alternativ besteht auch die Möglichkeit, diesen über ein ein- oder zweiadriges Verbindungskabel mit der Überwachungssensoreinrichtung zu koppeln. Diese Erfindungsausgestaltung bietet den besonderen Vorteil, dass das Informationssignal in Form des zählereigenen Funkprotokolls an den Empfänger gegeben werden kann, der das Signal mit einer üblichen 433 oder 868 MHz-Frequenz auswertet und ein entsprechendes Informationssignal erzeugt und direkt oder über ein Verbindungskabel auf den Signaleingang der Überwachungssensoreinrichtung gibt. Diese kann nun gestützt auf ihr eigenes Funkprotokoll oder Kommunikationsprotokoll die weiteren Überwachungssensoreinrichtungen ansprechen oder den eigenen Signalgeber ansteuern. Es ist hier also nicht erforderlich, in irgendeiner Weise die Kommunikation der beiden separaten Systeme, nämlich des Verbrauchszählers und der Überwachungssensoreinrichtung(en) aufeinander abzugleichen oder das eine entsprechend umzuprogrammieren, vielmehr ist lediglich ein einfach konzipierter Empfänger zwischenzuschalten, der das zählerseitige Funkprotokoll empfangen und auswerten kann und ein entsprechendes Informationssignal, das wiederum die Überwachungssensoreinrichtung lesen und verarbeiten kann, erzeugt. Jedes System arbeitet also nach wie vor mit seinem systemeigenen Programmierungen und Konfigurationen. Der Empfänger kann beliebig weit entfernt vom Funkzähler angeordnet sein, so lange er sich in Funkreichweite befindet

Denkbar ist es des Weiteren, dem Verbrauchszähler einen oder mehrer weitere in vor- oder nachgeschalteten oder parallel geschalteten Abschnitten der Rohrleitung gesetzte Verbrauchszähler mit Mitteln zur Leckerfassung zuzuordnen, die mit ihm kommunizieren und zur Erzeugung und Ausgabe eines Informationssignals an den ersten Verbrauchszähler bei Erfassung eines Lecks ausgebildet sind, wobei der erste Verbrauchszähler bei Eingang eines solchen Informationssignals ein Informationssignal an die (erste) Überwachungssensoreinrichtung ausgibt. Diese Erfindungsausgestaltung sieht vor, nicht nur einen Verbrauchszähler in das Alarmsystem einzubinden, sondern einen oder mehrere weitere, die an anderen Positionen angeordnet oder anderen Rohrleitungen, so in einem Gebäude verschiedene separate Leitungssysteme vorgesehen sind, zugeordnet sind. Der erste Verbrauchszähler dient quasi als Zentrale, mit dem die anderen Verbrauchszähler kommunizieren und ihm ein etwaiges erfasstes Leck mitteilen, wonach der erste Verbrauchszähler den oder die gekoppelten Überwachungssensoreinrichtungen anspricht.

Eine Überwachungseinrichtung kann ein beliebiger Sensor sein, wie sie üblicherweise in Gebäuden zur Erfassung bestimmter Situationen oder Umstände vorhanden sind. Beispielhaft zu nennen sind Ausführungen einer Überwachungssensoreinrichtung in Form eines Rauchsensors, der üblicherweise deckenseitig angeordnet ist und zum Erfassen einer etwaigen Rauchentwicklung bei einem Feuer dient, eines Wassersensors, der üblicherweise bodenseitig aufgestellt wird und ermittelt, ob in einem Raum eine Überschwemmung gegeben ist, eines Gassensors, der beispielsweise in sensiblen Umgebungen das Vorhandensein einer oder mehrerer nicht erwünschter oder unzulässiger Gassorten überwacht, eines Strahlungssensors, der beispielsweise in Räumen, in denen mitunter gefährliche Strahlung entstehen kann, angeordnet ist, eines Bewegungssensors oder eines beispielsweise bodenseitig integrierten und das Betreten eines Bodenabschnitts erfassenden Drucksensors. Diese Aufzählung ist nicht abschließen, sondern lediglich exemplarischer Natur und soll angeben, wie breitbandig die in eine erfindungsgemäße Einrichtung integrierbaren Überwachungssensoreinrichtungen, die originär anderen Zwecken als der Gabe eines Leckinformationssignals dienen, ist.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipdarstellung einer erfindungsgemäßen Einrichtung einer ersten Ausführungsform, und
- Fig. 2: eine Prinzipdarstellung einer erfindungsgemäßen Einrichtung einer zweiten Ausführungsform.

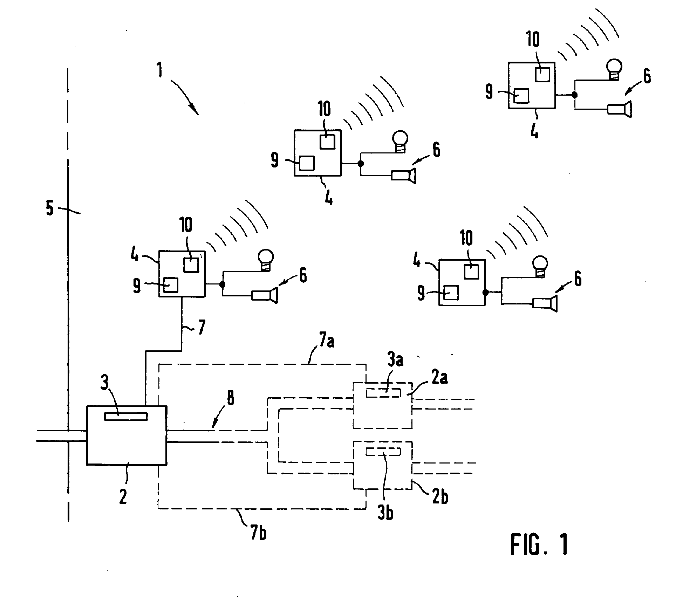

Fig. 1 zeigt eine erfindungsgemäße Einrichtung 1, umfassend einen Verbrauchszähler 2, bei dem es sich beispielsweise um einen Wasserzähler, einen Wärmezähler oder einen Volumenzähler handeln kann. Diese Aufzählung ist nicht abschließend, geeignet ist jedweder Verbrauchzähler gleich welcher Ausprägung, der die Möglichkeit bietet, einen auf ein Leck hindeutenden Durchfluss erfassen zu können. Der Verbrauchszähler 2 umfasst ein Leckerfassungsmittel 3, üblicherweise in Form einer geeigneten Arbeits- oder Auswerteelektronik, die die Verbrauchsdaten erfasst und aufbereitet. Beispielsweise ist zählerseitig ein Flügelrad integriert, das über das strömende Wasser in Bewegung gesetzt wird, wobei die Elektronik zur Erfassung der Flügelraddrehung und zur Ermittlung des Durchflusses ausgebildet ist etc. Die Ausgestaltung solcher Zähler ist hinreichend bekannt, hierauf kommt es im Detail nicht an. In jedem Fall ist das Leckerfassungsmittel in der Lage, ein etwaiges Leck zu detektieren.

Die Einrichtung 1 umfasst ferner wenigstens eine Überwachungssensoreinrichtung 4, bei der es sich beispielsweise um einen Rauchmelder handelt, der in einem Gebäude 5, das hier nur angedeutet ist, angeordnet ist. Die Überwachungssensoreinrichtung 4 weist einen Signalgeber 6 auf, hier angedeutet als optischer Signalgeber über das Glühbirnensymbol oder als akustischer Signalgeber angedeutet über das Lautsprechersymbol. In seiner eigentlichen Funktion beispielsweise als Rauchmelder erfasst die Überwachungssensoreinrichtung 6 eine etwaige im Überwachungsraum entstehende Rauchentwicklung, um dann über den Signalgeber 6 ein Alarmsignal geben zu können.

Erfindungsgemäß ist nun diese Überwachungssensoreinrichtung mit dem Verbrauchszähler 2 über eine Leitungsverbindung 7 direkt kommunizierend verbunden. Am Verbrauchszähler 2 ist ein entsprechender Signalausgang vorgesehen, auf den das Leckerfassungsmittel 3, hier also die Auswerteelektronik, ein entsprechendes Informationssignal gibt, wenn sie ein Leck in der nachgeschalteten Rohrleitung 8, die im Gebäude 5 verlegt ist und in die der Verbrauchszähler 2 geschaltet ist, detektiert. Dieses Informationssignal wird über die Leitungsverbindung 7 auf einen entsprechenden Signaleingang an der Überwachungssensoreinrichtung 4, an den die Leitungsverbindung 2 in Form eines ein- oder zweiadrigen Signalkabels angeschlossen ist, gegeben. Sobald ein solches Informationssignal eingeht, das nicht von der Überwachungssensoreinrichtung 4 selbst als Erfassungsergebnis erzeugt wird, sondern ausschließlich vom Verbrauchszähler 2 generiert und gegeben wird, wird über die Steuerungseinrichtung 9 der Überwachungssensoreinrichtung 4 ein entsprechendes Signal an die Signalgeber 6 gegeben, um das erfasste Leck zu signalisieren.

Im gezeigten Beispiel sind im Gebäude an beliebig vielen Stellen verteilt weitere Überwachungssensoreinrichtungen 4 vorgesehen. Alle Überwachungssensoreinrichtungen 4 bilden zusammen ein Netzwerk, kommunizieren also untereinander. Im gezeigten Beispiel geschieht dies per Funkt, das heißt, jede Überwachungssensoreinrichtung 4 besitzt neben der eigentlichen Steuerungseinrichtung 9, die den gesamten Erfassungsbetrieb, den die jeweilige Überwachungssensoreinrichtung 4 originär ausführt, steuert, auch ein Funksende- und empfangsmodul 10, wobei alle Überwachungssensoreinrichtungen 4 innerhalb des Netzwerks mit einem systemeigenen Funk- oder Kommunikationsprotokoll und einer systemeigenen Frequenz arbeiten.

Empfängt nun die erste Überwachungssensoreinrichtung 4, die über die Leitungsverbindung direkt mit dem Verbrauchszähler 2 gekoppelt ist, ein entsprechendes Informationssignal, so gibt sie nicht nur über den eigenen Signalgeber 6 ein Alarmsignal aus, sondern steuert auch per Funkt über die Funksende- und - empfangseinrichtung 10 alle anderen im Sendebereich befindlichen Überwachungssensoreinrichtungen 4 an, sendet also ein entsprechendes Informationssignal auf Basis des ersten originär vom Verbrauchszähler 2 gegebenen Informationssignals, das die empfangenen Überwachungssensoreinrichtungen veranlasst, zum einen ihrerseits über die zugeordneten Signalgeber 6 ein entsprechendes Alarmsignal auszugeben, wie auch über die integrierte Funksende- und - empfangseinrichtung 10 selbst ein Informationssignal weiter zu geben, um andere, bisher noch nicht angesprochene Überwachungssensoreinrichtungen anzusteuern und quasi multiplizierend das Alarmsignal zu verteilen.

Bei dieser Ausgestaltung setzt also der Verbrauchszähler 2 als Alarm- und Informationssignalgeber auf ein existierendes Überwachungssensornetzwerk auf und nutzt dieses zur multiplen Alarmsignalgabe in verschiedensten Gebäudebereichen.

Wie in Fig. 1 gestrichelt angedeutet ist, besteht die Möglichkeit, den Verbrauchszähler 2 mit weiteren Verbrauchszählern 2a, 2b in Kommunikationsverbindung, hier über die gestrichelt gezeichneten Verbindungsleitungen 7a, 7b, zu schalten. Diese weiteren Verbrauchszähler 2a, 2b können beispielsweise verschiedenen Rohrleitungsverzweigungen wie angedeutet ist zugeordnet sein, oder sie befinden sich in anderen Gebäudebereichen oder sind separaten Rohrleitungskreisläufen zugeordnet. Auch sie umfassen jeweils ein Leckerfassungsmittel 3a, 3b. Im Falle einer Leckerfassung geben diese über die jeweilige Leitungsverbindung 7a, 7b eine entsprechendes Informationssignal an den Verbrauchszähler 2, der seinerseits gegebenenfalls noch kein Leck erkennt, jedoch anhand des gegebenen Informationssignals umgehend über sein Leckerfassungsmittel 3, also seine zentrale Steuerelektronik, ein entsprechendes Informationssignal über die Leitungsverbindung 7 an die direkt mit ihm gekoppelte Überwachungssensoreinrichtung 4 gibt, um das Alarmsystem anzustoßen. Auch bei den weiteren Verbrauchszählern 2a, 2b kann es sich um ein beliebig ausgestalteten Zähler, seien es Volumenzähler, Wärmezähler oder Wasserzähler handeln.

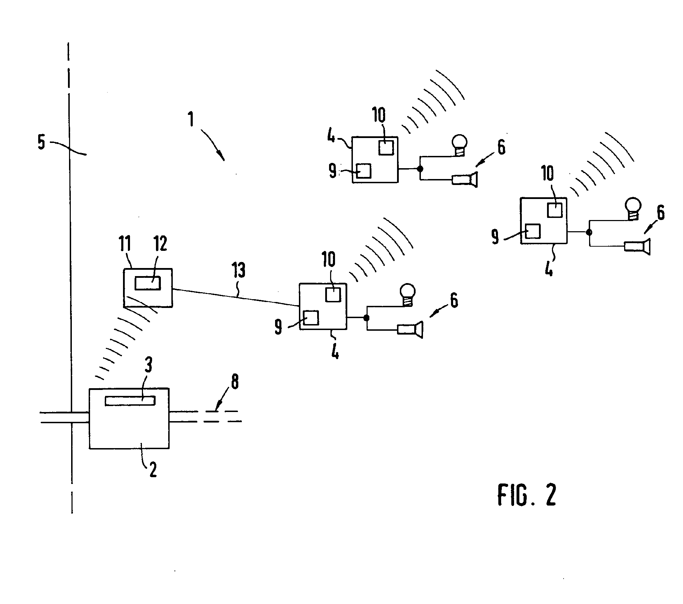

Fig. 2 zeigt in Form einer Prinzipdarstellung eine weitere Ausgestaltung einer erfindungsgemäßen Einrichtung 1, bei der ebenfalls in eine Rohrleitung 8 ein Verbrauchszähler 2 geschaltet ist, der ein Leckerfassungsmittel 3 aufweist. Dieser kommuniziert hier indirekt mit einem Netzwerk umfassend verschiedene Überwachungssensoreinrichtungen 4, die den Überwachungssensoreinrichtungen 4 aus Fig. 1 entsprechen und jeweils eine Steuerungseinrichtung 9 sowie eine Funksende- und -empfangseinrichtung 10 sowie einen Signalgeber 6 beliebiger Art umfassen. Die Kopplung mit dem Verbrauchszähler 2 ist hier jedoch indirekt. Dem Verbrauchszähler 2 zugeordnet ist ein Empfänger 11, der drahtlos, also per Funk mit dem Verbrauchszähler 2 kommuniziert. Hierzu weist die Steuerelektronik des Zählers 2, mithin also das Leckerfassungsmittel 3 einen entsprechenden Funksender auf, während der Empfänger 11 einen entsprechenden Funkempfänger 12 besitzt. Sobald vom Leckerfassungsmittel 3 über den Funksender ein entsprechendes Informationssignal über ein erfasstes Leck ausgesendet und vom Empfänger 11 empfangen wird, erzeugt dieser auf Basis des Informationssignals, das auf Basis eines verbrauchszählerspezifischen Datenfunkprotokolls erstellt wurde, ein entsprechendes Informationssignal, das wiederum die Überwachungssensoreinrichtung 4, die mit ihm über eine Leitungsverbindung 13 gekoppelt ist, lesen und verarbeiten kann. Die Leitungsverbindung 13 ist am Empfänger an und einem entsprechenden Kabelausgang und an der Überwachungssensoreinrichtung 4 an einem üblicherweise von Haus aus vorgesehenen entsprechenden Kabeleingang angeschlossen. Sobald das vom Empfänger 11 gegebenen Informationssignal an der Überwachungssensoreinrichtung 4 eingeht, steuert diese über die Steuerungseinrichtung 9 den Signalgeber 6 an, wie auch über die Funksende- und - empfangseinrichtung 10 ein entsprechendes Funksignal an alle anderen im Funkbereich vorhandenen Überwachungssensoreinrichtungen 4 gegeben wird, die ihrerseits wiederum die eigenen Signalgeber 6 ansteuern und wiederum das Signal per Funk weiterverbreiten. Die Kommunikation der Überwachungssensoreinrichtungen 4 untereinander erfolgt auf Basis des einrichtungsspezifischen, also netzwerkspezifischen Funkprotokolls, das heißt, dieses System kommuniziert drahtlos völlig losgelöst und unabhängig vom Verbrauchszähler 2 und dem zugeordneten Empfänger 11, die auf Basis des verbrauchszählereigenen Kommunikationsprotokolls miteinander kommunizieren.

An dieser Stelle ist darauf hinzuweisen, dass der Empfänger 11 auch direkt an der ersten Überwachungssensoreinrichtung 4 angeordnet, also an dieser am entsprechenden Signaleingang eingesteckt werden kann, sofern sich die gebäudeseitig ohnehin fest installierte Überwachungssensoreinrichtung 4 in Reichweite des Funksenders des Verbrauchszählers 2 befindet, die Leitungsverbindung 13 kann in diesem Fall entfallen.

## Patentansprüche

1. Einrichtung zum Erfassen und Signalisieren eines Lecks in einer gebäudeseitig verlegten Rohrleitung, umfassend einen in diese oder eine vorgeschaltete Rohrleitung gesetzten, ein Leckerfassungsmittel aufweisenden Verbrauchszähler, der zur Erzeugung und Ausgabe eines ein Leck anzeigenden Informationssignals ausgebildet ist, **dadurch gekennzeichnet, dass** der Verbrauchszähler (2) direkt oder indirekt mit wenigstens einer gebäudeseitig vorgesehenen Überwachungssensoreinrichtung (4) umfassend einen Signalgeber (6) kommuniziert, an die der Verbrauchszähler (2) ein Informationssignal überträgt und die bei Eingang des Informationssignals zur Ausgabe eines Alarmsignals über den Signalgeber (6) ausgebildet ist.

2. Einrichtung nach Anspruch 1, **dadurch gekennzeichnet, dass** die Überwachungssensoreinrichtung (4) Teil eines mehrere solcher miteinander drahtgebunden oder drahtlos kommunizierender Überwachungssensoreinrichtungen (4) umfassenden Netzwerks ist, wobei die empfangende Überwachungssensoreinrichtung (4) bei Eingang eines Informationssignals zur Übertragung eines die Alarmsignalgabe anzeigenden Signals an eine oder mehrere weitere Überwachungssensoreinrichtungen (4) ausgebildet ist.

3. Einrichtung nach Anspruch 1 oder 2, **dadurch gekennzeichnet, dass** der Verbrauchszähler (2) mit der Überwachungssensoreinrichtung (4) direkt über eine Leitungsverbindung (7) kommuniziert.

4. Einrichtung nach Anspruch 1 oder 2, **dadurch gekennzeichnet, dass** der mit der Überwachungssensoreinrichtung (4) indirekt kommunizierende Verbrauchszähler (2) drahtlos mit einem Empfänger (11) kommuniziert, der direkt an der Überwachungssensoreinrichtung (4) angeordnet ist oder über eine Leitungsverbindung (13) mit der Überwachungssensoreinrichtung (4) kommuniziert.

5. Einrichtung nach einem der vorangehenden Ansprüche, **dadurch gekennzeichnet, dass** dem Verbrauchszähler (2) ein oder mehrere weitere in vor- oder nachgeschalteten Abschnitten der Rohrleitung gesetzte Verbrauchszähler (2a, 2b) mit Mitteln (3a, 3b) zur Leckerfassung zugeordnet sind, die mit ihm kommunizieren und zur Erzeugung und Ausgabe eines Informationssignals an den ersten Verbrauchszähler (2) bei Erfassung eines Lecks ausgebildet ist, wobei der erste Verbrauchszähler (2) bei Eingang eines solchen Informationssignals ein Informationssignal an die Überwachungssensoreinrichtung (4) ausgibt.

6. Einrichtung nach einem der vorangehenden Ansprüche, **dadurch gekennzeichnet, dass** eine Überwachungssensoreinrichtung (4) ein Rauchsensor, ein Wassersensor, ein Gassensor, ein Strahlungssensor, ein Bewegungssensor oder ein Drucksensor ist.
